# EUROPEAN PATENT SPECIFICATION

(11) **EP 4 148 087 B1**
(45) Date of publication and mention of the grant of the patent: **07.01.2026**
(21) Application number: 22195340.9
(22) Date of filing: 13.09.2022
(51) Int. Cl.: C08K 5/04, C08L 23/12

(54) **SOFT POLYOLEFIN RESIN COMPOSITION FOR POWER CABLES WITH EXCELLENT INSULATION CHARACTERISTICS AND ARTICLE MOLDED THEREFROM**
WEICHE POLYOLEFINHARZZUSAMMENSETZUNG FÜR STROMKABEL MIT HERVORRAGENDEN ISOLATIONSEIGENSCHAFTEN UND DARAUS GEFORMTER ARTIKEL
COMPOSITION DE RÉSINE DE POLYOLÉFINE SOUPLE POUR CÂBLES D'ALIMENTATION AYANT D'EXCELLENTES CARACTÉRISTIQUES D'ISOLATION ET ARTICLE MOULÉ À PARTIR DE CELLE-CI

(30) Priority: 14.09.2021 KR 20210122134
(43) Date of publication of application: 15.03.2023
(73) Proprietor: Hanwha TotalEnergies Petrochemical Co., Ltd., Seosan-si, Chungcheongnam-do 31900 (KR)
(72) Inventor: LEE, Eunwoong, 31900 Chungcheongnam-do (KR); CHOI, Joonhyeong, 31900 Chungcheongnam-do (KR); CHUN, YongSung, 31900 Chungcheongnam-do (KR)
(74) Representative: HGF

(56) References cited:
- EP-A1- 1 344 793
- CN-A- 110 498 997

## Description

### Technical Field

The present invention relates to a soft polyolefin resin composition suitable for use in power cables by virtue of its excellent insulation characteristics and to an article molded therefrom. Specifically, the present invention relates to a soft polyolefin resin composition suitable for use in high-voltage and ultra-high-voltage power cables by virtue of its excellent insulation characteristics, as well as excellent thermal resistance, breakdown voltage characteristics, capability for controlling space charges, and mechanical properties, and to an article molded therefrom.

### Background Art of the Invention

In general, polypropylene resins are widely used in the products that require insulation characteristics at high voltages and high thermal resistance at the same time, such as packaging of major parts of electronic products, housings of electrical parts for automobiles, protection of major parts of electrical products, and surfaces of small heaters, by virtue of their excellent rigidity, high thermal resistance, high resistance to chemicals, and high insulation characteristics.

In addition, since polypropylene has excellent mechanical strength, abrasion resistance, and water resistance, as well as excellent dielectric properties, it is effective for insulation of ultra-high-voltage products.

However, since polypropylene resins have high rigidity and stress whitening takes place when they are bent, it is difficult to apply them to curved parts. Since they are vulnerable to external impacts and are easily broken, particularly at low temperatures, it is difficult to use them as an insulation material for high-voltage and ultra-high-voltage wires installed in an outdoor environment.

Currently, a low-density polyethylene, an ethylene-propylene rubber copolymer (EPR), an ethylene-propylene-diene rubber copolymer (EPDM), or the like, which has low dielectricity and is non-polar, is used as an insulation material for electric wires. In addition, a crosslinked polyethylene (XLPE), which is prepared by crosslinking a low-density polyethylene, is used to improve thermal resistance for the purpose of transferring a high-voltage and ultra-high-voltage current in large flux.

However, when a crosslinked polyethylene is used, a problem arises in that space charges that reduce the insulation performance of a DC insulator are accumulated by the crosslinking residues. It cannot be recycled when the lifespan of a product has expired or a defect occurs. It is not environmentally friendly since it has to be incinerated, and recycling incurs additional equipment costs. In addition, there are several disadvantages in that environmental contamination is likely to occur due to the crosslinked by-products generated in the crosslinking step, that a drying step of a product is further required in the case of moisture curing, and that the processability of a product is limited when the crosslinking is excessive due to the heat generated during extrusion.

In order to address these disadvantages, attempts have been made to improve the softness or impact characteristics by mixing EPR, ethylene-α-olefin rubber, EPDM, or the like with a polypropylene resin having excellent thermal resistance. In such a case, a phase separation between the polypropylene matrix and rubber component may take place, thereby causing a decrease in the electrical insulation properties. If the ratio of rubber is excessively high, a phase inversion between the matrix and rubber component may take place, resulting in a decrease in the thermal resistance.

In order to solve this problem, research has been conducted to improve softness and impact resistance, as well as secure breakdown voltage characteristics and thermal resistance, in a polyolefin resin composition containing polypropylene as a main component.

For example, International Publication No. 2013/148028 teaches the changes in alternating-current breakdown voltage with respect to the cooling rate when ethylene-α-olefin, EPDM, or the like is mixed with a polypropylene resin. But it is silent on the improvement in the thermal resistance and softness of the composition.

Korean Laid-open Patent Publication No. 10-2012-0086071 discloses a method for producing an insulation material having excellent volume resistivity and dielectric breakdown strength by mixing inorganic nanoparticles with a polypropylene resin. But there is a disadvantage in that it is difficult to uniformly disperse the inorganic nanoparticles in the polypropylene.

Korean Patent No. 10-1784333 discloses a thermoplastic polymer whose softness is secured by using a copolymer of α-olefin and propylene. However, if the content of the rubber phase is small, it is difficult to install an electric cable that comprises the polymer material as an insulation material since the softness of the polymer material is deteriorated. If the content of the rubber phase is high, there is a problem in that the advantages of polypropylene, which have a significant impact on the mechanical properties of an electric cable, are compromised.

Korean Laid-open Patent Publication No. 10-2014-0102407 discloses an insulation layer of electric power cables having improved insulation characteristics and being recyclable by adding an insulation fluid to polypropylene. Korean Patent No. 10-1810542 discloses an electric power cable that employs an insulation layer comprising a polypropylene resin with an organic nucleating agent to reduce the crystal size. However, since a large amount of rubber is additionally compounded in order to resolve the problem of low flexibility caused by the high rigidity of polypropylene, the physical properties may be partially deteriorated due to nonhomogeneous compounding. The organic nucleating agent added to reduce the crystal size causes a cost increase and adverse effects. Thus, the use of polypropylene in an insulation layer of electric power cables is in need of improvement.

Korean Patent No. 10-0246138 discloses a polypropylene resin composition having improved durability, impact resistance, and low-temperature impact resistance in which the composition is composed of a polypropylene resin and an ethylene-propylene copolymer resin or an ethylene-α-olefin copolymer rubber. But it is silent on the actual results of low-temperature impact resistance tests at -40°C; and as the content of the ethylene-propylene rubber or ethylene-α-olefin rubber increases to ensure softness for the application to electric wires, it is not suitable as a material for electric wires due to poor tensile characteristics, mechanical properties, and heat deformation.

CN 110498997A describes a polypropylene-based high-voltage direct-current cable material and a preparation method thereof.

Meanwhile, high-voltage and ultra-high-voltage power cables are usually wound around a drum for transportation, and they may be bent or warped depending on the terrain when installed. As the applied voltage of a power cable increases, the thickness of the insulation layer is to be increased; thus, the softness characteristics are of more importance.

Accordingly, there is a demand for the development of a soft polypropylene-based polyolefin resin composition suitable for use in high-voltage and ultra-high-voltage power cables by virtue of its excellent insulation properties by addressing the disadvantages of the above-mentioned patent documents.

### Disclosure of the Invention

### Technical Problem to Solve

An object of the present invention is to provide a soft polyolefin resin composition suitable for use in high-voltage and ultra-high-voltage power cables by virtue of its excellent insulation characteristics, as well as excellent thermal resistance, breakdown voltage characteristics, capability for controlling space charges, and mechanical properties.

Another object of the present invention is to provide an article prepared from the polyolefin resin composition.

### Solution to the Problem

According to an embodiment of the present invention to accomplish the above object, there is provided a polyolefin resin composition, which comprises (A) 60 to 100% by weight of an ethylene-propylene block copolymer obtained by polymerization of a propylene homopolymer or an ethylene-propylene random copolymer with an ethylene-propylene rubber copolymer in stages in reactors; and (B) 0 to 40% by weight of an ethylene-α-olefin rubber copolymer, based on the total weight of components (A) and (B), wherein the polyolefin resin composition further comprises (C) 0.02 to 0.5 part by weight of a beta nucleating agent for forming beta crystals relative to 100 parts by weight of component (A) and component (B), and wherein when the polyolefin resin composition is extracted at room temperature with a xylene solvent according to the method outlined in the description, the content of the rubber component (or solvent extract) thus extracted is 25 to 45% by weight.

In a specific embodiment of the present invention, when the ethylene-propylene block copolymer (A) is extracted at room temperature with a xylene solvent, the content of the rubber component (or solvent extract) thus extracted may be 1 to 45% by weight, preferably 15 to 40% by weight. As used herein, the term *room temperature* refers to a temperature in the range of 20 to 25°C.

In a specific embodiment of the present invention, the solvent extract may have an intrinsic viscosity of 1.0 to 3.0 dl/g when measured in a decalin solvent at 135°C.

In a specific embodiment of the present invention, the ethylene-propylene block copolymer (A) may have a melting temperature (Tm) of 150 to 165°C.

In a specific embodiment of the present invention, the ethylene-propylene block copolymer (A) may have a melt index of 0.5 to 20.0 g/10 minutes, preferably 0.5 to 10.0 g/10 minutes, when measured at 230°C under a load of 2.16 kg according to ASTM D1238.

In a specific embodiment of the present invention, the content of ethylene in the ethylene-α-olefin rubber copolymer (B) may be 5 to 90% by weight, preferably 10 to 70% by weight.

In a specific embodiment of the present invention, the ethylene-α-olefin rubber copolymer (B) may comprise at least one selected from the group consisting of an ethylene-propylene rubber, an ethylene-1-butene rubber, an ethylene-butylene rubber, an ethylene-1-pentene rubber, an ethylene-1-hexene rubber, ethylene-1-heptene rubber, ethylene-1-octene rubber, and an ethylene-4-methyl-1-pentene rubber.

In a specific embodiment of the present invention, the beta nucleating agent (C) may comprise at least one selected from the group consisting of gamma-quinacridone, delta-quinacridone, quinacridonequinone, indigosol, and civantine organic pigments, calcium carbonate modified with dimer aluminate, a mixture of calcium stearate and pimelic acid, diacidic calcium and zinc salts, diamines of adipic acid or suberic acid, N,N-dicyclohexyl-terephthalamide, and N',N'-dicyclohexyl-2,6-naphthalene-dicarboxy-amide.

The polyolefin resin composition according to an embodiment of the present invention may further comprise at least one additive selected from the group consisting of an antioxidant, a neutralizer, a UV stabilizer, a long-term heat stabilizer, a slip agent, an anti-blocking agent, a reinforcing agent, a filler, a weathering stabilizer, an antistatic agent, a lubricant, a nucleating agent, a flame retardant, a pigment, and a dye.

When the polyolefin resin composition is extracted at room temperature with a xylene solvent, the content of the rubber component (or solvent extract) thus extracted is 25 to 45% by weight, preferably 30 to 40% by weight.

In a specific embodiment of the present invention, the solvent extract may have an intrinsic viscosity of 1.0 to 3.0 dl/g when measured in a decalin solvent at 135°C.

In a specific embodiment of the present invention, the polyolefin resin composition may have a melting temperature (Tm) of 150 to 165°C.

In a specific embodiment of the present invention, the polyolefin resin composition may have a melt index of 0.5 to 20.0 g/10 minutes, preferably 0.5 to 10.0 g/10 minutes, when measured at 230°C under a load of 2.16 kg according to ASTM D1238.

In a specific embodiment of the present invention, the glass transition temperature of the rubber component in the polyolefin resin composition appears at -60 to -40°C and - 40 to -20°C, respectively, when measured by a dynamic mechanical analyzer.

According to another embodiment of the present invention, there is provided a polyolefin resin article molded from the polyolefin resin composition.

In a specific embodiment of the present invention, the polyolefin resin article may have a flexural modulus of less than 400 MPa.

In a specific embodiment of the present invention, the polyolefin resin article may have a volume resistivity of 10¹⁶ Ωcm or more when measured at room temperature, and the volume resistivity when measured after the same specimen is heated (or aged) at 140°C for 30 days may be 10¹⁶ Ωcm or more.

In a specific embodiment of the present invention, the polyolefin resin article may have an elongation of 400% or more, and the elongation when measured after the same specimen is heated (or aged) at 140°C for 30 days may be 75% or more relative to the initial (before heating) elongation.

In a specific embodiment of the present invention, the polyolefin resin article in the form of a film having a thickness of 80 µm may have a DC dielectric breakdown strength of 300 kV/mm or more, and the DC dielectric breakdown strength when measured after the same specimen is heated (or aged) at 140°C for 30 days may be 300 kV/mm or more.

In a specific embodiment of the present invention, the polyolefin resin article having a length of 30 mm, a width of 15 mm, and a thickness of 2 mm may have a deformation rate of less than 50% after a load of 1.6 kg is imposed thereon at 130°C for 6 hours.

In a specific embodiment of the present invention, the polyolefin resin article may be an insulation layer of a high-voltage or ultra-high-voltage power cable.

### Effects of the Invention

The polyolefin resin composition according to an embodiment of the present invention is excellent in insulation characteristics, as well as excellent in thermal resistance, breakdown voltage characteristics, capability for controlling space charges, and mechanical properties. Accordingly, the polyolefin resin article prepared therefrom is suitable for use in a high-voltage and ultra-high-voltage power cable.

### Detailed Description for Carrying out the Invention

Hereinafter, the present invention will be described in more detail.

### Polyolefin resin composition

According to an embodiment of the present invention, there is provided a polyolefin resin composition, which comprises (A) 60 to 100% by weight of an ethylene-propylene block copolymer obtained by polymerization of a propylene homopolymer or an ethylene-propylene random copolymer with an ethylene-propylene rubber copolymer in stages in reactors; and (B) 0 to 40% by weight of an ethylene-α-olefin rubber copolymer, based on the total weight of components (A) and (B), wherein the polyolefin resin composition further comprises (C) 0.02 to 0.5 part by weight of a beta nucleating agent for forming beta crystals relative to 100 parts by weight of component (A) and component (B).

### (A) Ethylene-propylene block copolymer

The polyolefin resin composition according to an embodiment of the present invention comprises an ethylene-propylene block copolymer (A). Here, the ethylene-propylene block copolymer (A) is obtained by polymerization of a propylene homopolymer or an ethylene-propylene random copolymer with an ethylene-propylene rubber copolymer in stages in reactors.

In a specific embodiment of the present invention, a polypropylene-based matrix of a propylene homopolymer or an ethylene-propylene random copolymer is first polymerized, followed by block copolymerization of an ethylene-propylene rubber component to the polypropylene-based matrix, whereby an ethylene-propylene block copolymer (A) resin may be prepared.

In a specific embodiment of the present invention, when the ethylene-propylene block copolymer (A) is extracted at room temperature with a xylene solvent, the content of the rubber component (or solvent extract) thus extracted may be 1 to 45% by weight, preferably 15 to 40% by weight. If the content of the solvent extract in the ethylene-propylene block copolymer (A) exceeds 45% by weight, a phase transition may take place between the polypropylene matrix and the rubber component, resulting in high heat deformation and low tensile strength and elongation, making it unsuitable for application to electric wires.

In a specific embodiment of the present invention, the solvent extract may have an intrinsic viscosity of 1.0 to 3.0 dl/g when measured in a decalin solvent at 135°C. If the intrinsic viscosity of the solvent extract is less than 1.0 dl/g, the impact strength of a molded article may be deteriorated. If it exceeds 3.0 dl/g, the rubber component may aggregate in the ethylene-propylene block copolymer (A), which causes the accumulation of space charges and the distortion of electric fields at the interface between the polypropylene matrix and the rubber component.

In a specific embodiment of the present invention, the ethylene-propylene block copolymer (A) may have a melting temperature (Tm) of 150 to 165°C. If the melting temperature of the ethylene-propylene block copolymer (A) is lower than 150°C, the thermal resistance of a molded article may not be sufficient, and the resin may be deformed by heat. Thus, it is not suitable for application to high-voltage power cables whose operating temperature and instantaneous temperature rise up to 130°C or higher.

In a specific embodiment of the present invention, the ethylene-propylene block copolymer (A) may have a melt index of 0.5 to 20.0 g/10 minutes, preferably 0.5 to 10.0 g/10 minutes, when measured at 230°C under a load of 2.16 kg according to ASTM D1238. If the melt index of the ethylene-propylene block copolymer (A) is less than 0.5 g/10 minutes, the extrusion temperature and load may increase, resulting in a lower productivity along with carbides. If it exceeds 20.0 g/10 minutes, a deflection of the extrudate may take place during extrusion, which is not preferable.

The polyolefin resin composition according to an embodiment of the present invention comprises 60 to 100% by weight of the ethylene-propylene block copolymer (A) based on the total weight of components (A) and (B). If the content of the ethylene-propylene block copolymer (A) is less than 60% by weight, the thermal resistance of a molded article may be reduced, and the heat deformation characteristics may be deteriorated, so that the deformation of appearance may be aggravated in the operation at high temperatures.

There is no particular limitation to the method of preparing the ethylene-propylene block copolymer (A). Any method of preparing an ethylene-propylene block copolymer known in the art to which the present invention pertains may be used as it is or appropriately modified.

Preferably, the ethylene-propylene block copolymer resin may be prepared by a polymerization method known to those skilled in the art using Mitsui's Hypol process in which two bulk reactors and one gas-phase reactor are connected in series, and polymerization is continuously carried out therein.

Specifically, in the first- and second-stage reactors, propylene alone is injected to produce a propylene homopolymer, or ethylene is additionally injected thereto to produce an ethylene-propylene random copolymer. In the case of polymerization of an ethylene-propylene random copolymer, the same amount of ethylene may be copolymerized in each polymerization reactor. In the ensuing third-stage reactor, ethylene and propylene may be injected to block-polymerize an ethylene-propylene rubber component, thereby obtaining the final ethylene-propylene block copolymer. The melt index of the resulting copolymer can be controlled by injecting hydrogen into each reactor.

In the above polymerization step, a catalyst known in the art may be used without a limitation thereto. For example, a Ziegler-Natta catalyst or a single-site catalyst may be used, and a catalyst capable of producing a polypropylene resin having high tacticity is preferably used.

In a specific embodiment of the present invention, the catalyst may be prepared by reacting a titanium compound with an internal electron donor on a magnesium chloride or dialkoxy magnesium carrier. For example, a Ziegler-Natta catalyst may be composed of a carrier made of dialkoxymagnesium particles obtained by reacting metallic magnesium and an alcohol in the presence of a halogen compound or a nitrogen halogen compound as a reaction initiator, titanium tetrachloride, and an internal electron donor.

Here, the form of the metallic magnesium particles used for the preparation of the dialkoxymagnesium carrier is not particularly limited. However, a powder form having an average particle diameter of 10 to 300 µm is preferable, and a powder form having an average particle diameter of 50 to 200 µm is more preferable. The average particle diameter of the metallic magnesium is determined by dynamic light scattering. If the average particle diameter of the metallic magnesium is less than 10 µm, the average particle size of the carrier as a product becomes too fine, which is not preferable. If the average particle diameter of the metallic magnesium exceeds 300 µm, the average particle size of the carrier becomes too large, and it is difficult to form a uniform spherical shape of the carrier, which is not preferable.

It is preferable to use the catalyst thus obtained with an organoaluminum compound (e.g., triethylaluminum) as a co-catalyst and a dialkyldialkoxysilane-based compound (e.g., dicyclopentyldimethoxysilane) as an external electron donor.

### (B) Ethylene-α-olefin rubber copolymer

The polyolefin resin composition according to an embodiment of the present invention may comprise an ethylene-α-olefin rubber copolymer (B). The ethylene-α-olefin rubber copolymer (B) may serve to improve the softness of a molded article.

In a specific embodiment of the present invention, the α-olefin in the ethylene-α-olefin rubber copolymer (B) may have 3 to 8 carbon atoms. Specifically, the ethylene-α-olefin rubber copolymer (B) may comprise at least one selected from the group consisting of an ethylene-propylene rubber, an ethylene-1-butene rubber, an ethylene-butylene rubber, an ethylene-1-pentene rubber, an ethylene-1-hexene rubber, ethylene-1-heptene rubber, ethylene-1-octene rubber, and an ethylene-4-methyl-1-pentene rubber. Preferably, the ethylene-α-olefin rubber copolymer (B) may be an ethylene-propylene rubber.

In a specific embodiment of the present invention, the content of ethylene in the ethylene-α-olefin rubber copolymer (B) may be 5 to 90% by weight, preferably 10 to 70% by weight. Specifically, the content of ethylene may be 5 to 90% by weight, preferably 10 to 70% by weight, when the ethylene-α-olefin rubber copolymer (B) is measured by a Fourier transform infrared spectrometer. If the content of ethylene is less than 5% by weight, the ethylene-propylene rubber may be crystallized to reduce the low-temperature impact strength of the polyolefin resin composition. If the content of ethylene exceeds 90% by weight, a rubber copolymer is hardly obtained.

The polyolefin resin composition according to an embodiment of the present invention may comprise the ethylene-α-olefin rubber copolymer (B) in an amount of 0 to 40% by weight based on the total weight of components (A) and (B). If the ethylene-α-olefin rubber copolymer (B) is added, the softness is improved. If it exceeds 40% by weight, however, the thermal resistance characteristics may be steeply deteriorated.

The ethylene-α-olefin rubber copolymer (B) may be polymerized by additionally feeding ethylene and an olefin monomer in the presence of the ethylene-propylene block copolymer (A) in the fourth-stage gas-phase reactor following the Hypol process described above.

In another method, a commercially available ethylene-α-olefin rubber copolymer (B) may be blended with the ethylene-propylene block copolymer (A) obtained in the Hypol process, thereby preparing the polyolefin resin composition of the present invention. Examples of the ethylene-α-olefin rubber copolymer (B) commercially available include Versify (Dow), Vistamaxx (ExxonMobil), Tafmer (Mitsui), KEP (Kumho Petrochemical), Engage (Dow), Exact (ExxonMobil), Lucene (LG Chemical), and Solumer (SK Chemical), but it is not particularly limited thereto.

### (C) Beta nucleating agent

The polyolefin resin composition according to an embodiment of the present invention further comprises a beta nucleating agent (C). The beta nucleating agent (C) promotes the formation of beta crystals during the molding of an article, so that it may serve to improve softness, insulation characteristics, and breakdown voltage characteristics without lowering thermal resistance.

In a specific embodiment of the present invention, the beta nucleating agent (C) may comprise at least one selected from the group consisting of gamma-quinacridone, delta-quinacridone, quinacridonequinone, indigosol, and civatine organic pigments, calcium carbonate modified with dimer aluminate, a mixture of calcium stearate and pimelic acid, diacidic calcium and zinc salts, diamines of adipic acid or suberic acid, N,N-dicyclohexyl-terephthalamide, and N',N'-dicyclohexyl-2,6-naphthalene-dicarboxy-amide.

The polyolefin resin composition according to an embodiment of the present invention may comprise the beta nucleating agent (C) in an amount of 0.02 to 0.5 part by weight relative to 100 parts by weight of component (A) and component (B).

If the content of the beta nucleating agent (C) is less than 0.02 part by weight, beta crystals may not be sufficiently formed, so that the elongation, impact resistance, and breakdown voltage characteristics of a molded article may not be noticeably improved. If the content of the beta nucleating agent (C) exceeds 0.5 part by weight, the beta crystals may not sufficiently grow to spherulites, so that the impact resistance, breakdown voltage characteristics, and effect of controlling space charges of a molded article are deteriorated.

### (D) Additive

The polyolefin resin composition according to an embodiment of the present invention may further comprise an additive (D) within a range that does not depart from the scope of the present invention. Specifically, the polyolefin resin composition according to an embodiment of the present invention may comprise the additive (D) in an amount of 0.3 to 2.0 parts by weight relative to 100 parts by weight of component (A) and component (B). If the content of the additive (D) is less than 0.3 part by weight, it is difficult to produce the effect of the additive. If it exceeds 2.0 parts by weight, the increase in the effect of the additive may be insignificant, thereby deteriorating the economic feasibility of a product, and the additive may act as an impurity to deteriorate the electrical properties.

Examples of the additive (D) include an antioxidant, a neutralizer, a UV stabilizer, a long-term heat stabilizer, a slip agent, an anti-blocking agent, a reinforcing agent, a filler, a weathering stabilizer, an antistatic agent, a lubricant, a nucleating agent, a flame retardant, a pigment, and a dye, but it is not particularly limited thereto.

As a preferable embodiment, the polyolefin resin composition according to an embodiment of the present invention may further comprise an antioxidant. The antioxidant may be a phenolic antioxidant, a phosphite antioxidant, or the like. Specifically, it may comprise at least one antioxidant selected from the group consisting of tetrakis(methylene(3,5-di-t-butyl-4-hydroxy)hydrosilylnate), 1,3,5-trimethyl-tris(3,5-di-t-butyl-4-hydroxybenzyl)benzene, and tris(2,4-di-t-butylphenyl)phosphite, but it is not particularly limited thereto.

As a preferable embodiment, the polyolefin resin composition according to an embodiment of the present invention may further comprise a neutralizer. The neutralizer may comprise at least one selected from the group consisting of hydrotalcite and calcium stearate, but it is not particularly limited thereto.

### Preparation of a polyolefin resin composition

There is no particular limitation to the method for preparing the polyolefin resin composite according to an embodiment of the present invention. Any blending method known in the technical field of the present invention may be used as it is or appropriately modified.

As a specific example, the resins, compounds, and additives described above are supplied to a mixer such as a kneader, a roll, and a Banbury mixer, or a single- or twinscrew extruder in predetermined amounts, and they are then blended with this apparatus, thereby preparing the polyolefin resin composition of the present invention.

When the polyolefin resin composition is extracted at room temperature with a xylene solvent, the content of the rubber component (or solvent extract) thus extracted is 25 to 45% by weight, preferably 30 to 40% by weight. If the content of the solvent extract in the polyolefin resin composition is less than 25% by weight, the strength of a molded article may be high, thereby deteriorating the flexibility. If the content of the solvent extract in the polyolefin resin composition exceeds 45% by weight, a phase transition may take place between the polypropylene matrix and the rubber component, resulting in high heat deformation and low tensile strength and elongation, making it unsuitable for application to electric wires.

In a specific embodiment of the present invention, the solvent extract may have an intrinsic viscosity of 1.0 to 3.0 dl/g when measured in a decalin solvent at 135°C. If the intrinsic viscosity of the solvent extract is less than 1.0 dl/g, the impact strength of a molded article may be deteriorated. If it exceeds 3.0 dl/g, the rubber component may aggregate in the polyolefin resin composition, which causes the accumulation of space charges and the distortion of electric fields at the interface between the polypropylene matrix and the rubber component.

In a specific embodiment of the present invention, the polyolefin resin composition may have a melting temperature (Tm) of 150 to 165°C. If the melting temperature of the polyolefin resin composition is lower than 150°C, the thermal resistance of a molded article may not be sufficient, and the resin may be deformed by heat. Thus, it may not be suitable for application to high-voltage power cables whose operating temperature and instantaneous temperature rise up to 130°C or higher.

In a specific embodiment of the present invention, the polyolefin resin composition may have a melt index of 0.5 to 20.0 g/10 minutes, preferably 0.5 to 10.0 g/10 minutes, when measured at 230°C under a load of 2.16 kg according to ASTM D1238. If the melt index of the polyolefin resin composition is less than 0.5 g/10 minutes, the extrusion temperature and load may increase, resulting in a lower productivity along with carbides. If it exceeds 20.0 g/10 minutes, a deflection of the extrudate may take place during extrusion, which is not preferable.

In a specific embodiment of the present invention, the glass transition temperature of the rubber component in the polyolefin resin composition appears at -60 to -40°C and - 40 to -20°C, respectively, when measured by a dynamic mechanical analyzer. If the glass transition temperature of the rubber component appears at -60 to -40°C alone, the blending capability of the resin composition may be deteriorated, resulting in stress whitening, and the distortion of electric fields may take place at the interface between the polypropylene-based matrix and the rubber component. If the glass transition temperature of the rubber component appears at -40 to -20°C alone, the low-temperature impact resistance measured at -40°C may be deteriorated.

### Molded article

According to another embodiment of the present invention, there is provided a polyolefin resin article molded from the polyolefin resin composition.

There is no particular limitation to the method for preparing a molded article from the polyolefin resin composition according to an embodiment of the present invention. Any method known in the technical field of the present invention may be used. For example, the polyolefin resin composition according to an embodiment of the present invention may be molded by a conventional method such as injection molding, extrusion molding, casting molding, or the like to prepare a polyolefin resin molded article.

In a specific embodiment of the present invention, the polyolefin resin article may have a flexural modulus of less than 400 MPa. If the flexural modulus of a molded article is within the above range, the molded article has excellent softness. Thus, when it is applied to an insulation layer of an ultra-high voltage power cable, it has excellent flexibility even if the thickness of the insulation layer is thick, which makes it possible to conveniently install high-voltage or ultra-high-voltage power cables.

In a specific embodiment of the present invention, the polyolefin resin article may have a volume resistivity of 10¹⁶ Ωcm or more, and the volume resistivity when measured after the same specimen is heated (aged) at 140°C for 30 days may be 10¹⁶ Ωcm or more. If the volume resistivity is within the above range, the molded article may preferably serve as an insulator.

In a specific embodiment of the present invention, the polyolefin resin article may have an elongation of 400% or more, and the elongation when measured after the same specimen is heated (or aged) at 140°C for 30 days may be 75% or more relative to the initial (before heating) elongation. If the elongation of the molded article is less than 400%, breakage may take place at the outermost portion of a bend of the molded article.

In a specific embodiment of the present invention, the polyolefin resin article in the form of a film having a thickness of 80 µm may have a DC dielectric breakdown strength of 300 kV/mm or more, and the DC dielectric breakdown strength when measured after the same specimen is heated (or aged) at 140°C for 30 days may be 300 kV/mm or more. If the DC dielectric breakdown strength of the molded article is within the above range, the molded article is excellent in breakdown voltage characteristics, so that it may preferably serve as an insulator.

In a specific embodiment of the present invention, the polyolefin resin article having a length of 30 mm, a width of 15 mm, and a thickness of 2 mm may have a deformation rate of less than 50% after a load of 1.6 kg is imposed thereon at 130°C for 6 hours. If the deformation rate of the molded article is within the above range, the molded article may preferably serve as an insulator. If the deformation rate of the molded article exceeds the above range, heat may be generated during power transmission and distribution, whereby the shape and structure of the molded article may collapse.

In a specific embodiment of the present invention, the polyolefin resin article may be an insulation layer of a high-voltage or ultra-high-voltage power cable.

### Example

Hereinafter, the present invention is explained in detail by the following examples. However, the following examples are intended to further illustrate the present invention. The scope of the present invention is not limited thereto only.

### Examples 1 to 3 and Comparative Examples 1 to 5

### Preparation of an ethylene-propylene block copolymer

Mitsui's Hypol process, in which two bulk reactors and one gas-phase reactor were connected in series for continuous polymerization, was used for the polymerization of an ethylene-propylene block copolymer. Here, the operating temperatures and pressures of the bulk reactors as the first- and second-stage reactors were in the range of 68 to 75°C and 25 to 35 kg/cm², and 60 to 67°C and 25 to 30 kg/cm², respectively. The operating temperatures and pressures of the gas-phase reactors as the third-stage reactor were in the range of 75 to 82°C and 15 to 20 kg/cm². When a propylene homopolymer was polymerized in the first- and second-stage bulk reactors, hydrogen was injected into each reactor in addition to propylene to adjust the melt index. When an ethylene-propylene random copolymer was polymerized, the ratio of ethylene and propylene was adjusted such that the same amount of ethylene was copolymerized in each reactor.

### Preparation of a polyolefin resin composition

Once the ethylene-propylene block copolymer had been prepared, ethylene and an olefin monomer were additionally fed in the presence of the ethylene-propylene block copolymer in the fourth-stage gas-phase reactor following the Hypol process described above, thereby copolymerizing an ethylene-α-olefin rubber copolymer. Alternatively, an ethylene-α-olefin copolymer selected from Versify (DOW), Vistamaxx (ExxonMobil), Tafmer (Mitsui), KEP (Kumho Petrochemical), Engage (DOW), Exact (ExxonMobil), Lucene (LG Chem) and Solumer (SK Chem) was blended with the ethylene-propylene block copolymer. Details on the resin components and physical properties are shown in Table 1. NAB82 (GCH Technology) as a beta nucleating agent or Millard3988 (DMDBS; Milliken) as an alpha nucleating agent was added to the resin obtained above to prepare a polyolefin resin composition.

### Test Example

The physical properties of the compositions and the molded article specimens prepared in Examples 1 to 3 and Comparative Examples 1 to 5 were measured according to the following methods and standards. The results are shown in Tables 1 and 2.

### (1) Melt index

The melt index was measured at 230°C under a load of 2.16 kg according to the ASTM D 1238 method.

### (2) Content of a solvent extract (or xylene soluble)

A polypropylene resin or composition was dissolved in xylene at a concentration of 1% at 140°C for 1 hour and left at room temperature for 2 hours for extraction. The weight of the extract was measured and expressed in percent based on the total weight of the resin or composition.

### (3) Intrinsic viscosity of a solvent extract

The intrinsic viscosity of a solvent extract in Section (2) above was measured in a decalin solvent at 135°C using a viscometer.

### (4) Melting temperature

A sample was kept isothermal at 200°C for 10 minutes in a differential scanning calorimeter (DSC; Q2000, TA Instrument) to remove the thermal history and then cooled from 200°C to 30°C at a rate of 10°C per minute for crystallization thereof to impart the same thermal history. Then, the sample was kept isothermal at 30°C for 10 minutes, followed by heating the sample at a rate of 10°C per minute. The melting temperature (Tm) was obtained from the peak temperature.

### (5) Glass transition temperature

In a dynamic mechanical analyzer (DMA; TA Instrument Q800), the temperature was raised from -140°C to 145°C at a rate of 2°C/min, and the glass transition temperature (Tg) of the rubber component was determined from the stress relaxation curve.

### (6) Flexural modulus (FM)

The flexural modulus was measured in accordance with the ASTM D 790 method. The size of the injection-molded specimen was 100 mm × 10 mm × 3 mm.

### (7) Heat deformation

A specimen having a length of 30 mm, a width of 15 mm, and a thickness of 2 mm was prepared by injection molding at 240°C. According to the KS C IEC 60811-508 method, a load of 1.6 kg was imposed on the specimen at 130°C for 6 hours, and the deformed thickness was measured. The deformation rate was obtained by dividing the deformed thickness by the initial thickness.

### (8) Izod impact strength

The Izod impact strength was measured at -40°C in accordance with the ASTM D 256 method.

### (9) Elongation at break

The elongation at break was measured at 25 mm/min in accordance with the IEC 60811-501 method. For the aging tests, the same specimen was aged at 140°C in a convection oven for 30 days, and the elongation was then measured. The residual elongation was obtained by dividing this value by the initial elongation.

### (10) Direct current (DC) breakdown voltage

A polypropylene specimen was prepared in the form of a sheet having a thickness of 80 µm using an experimental extruder (HAAKE extruder). The direct current breakdown voltage was measured at room temperature using spherical electrodes having a diameter of 12.7 mm according to the ASTM D 149-92 method. For the aging tests, the same specimen was aged at 140°C in a convection oven for 30 days, and the DC breakdown voltage was then measured.

### (11) Volume resistivity

An injection-molded specimen of 10 cm × 10 cm × 2 mm was prepared at an injection temperature of 240°C, which was aged at room temperature for 2 days, and the volume resistivity was then measured according to ASTM D257. For the aging tests, the same specimen was aged at 140°C in a convection oven for 30 days, and the volume resistivity was then measured.

**[Table 1]**

| | | Example | | | Comp. Example |
|---|---|---|---|---|---|
| | | 1 | 2 | 3 | 1 |
| Components of the composition | Content of component (A) (wt. %) | 85 | 95 | 75 | 85 |
| | Propylene content (wt. %) | 85 | 83 | 93 | 85 |
| | Ethylene content (wt. %) | 15 | 17 | 7 | 15 |
| | Solvent extract content (wt. %) | 30 | 41 | 17 | 30 |
| | Intrinsic viscosity of the solvent extract (dl/g) | 2.3 | 2.5 | 2.1 | 2.3 |
| | Melt index (g/10 min) | 1.7 | 2.6 | 5.3 | 1.8 |
| | Melting temp. (Tm; °C) | 152 | 151 | 153 | 152 |
| | Glass transition temperature (°C) | -43 | -49/-31 | -28 | -43 |
| | Content of component (B) (wt. %) | 15 | 5 | 25 | 15 |
| | Propylene content (wt. %) | 85 | - | - | 85 |
| | Ethylene content (wt. %) | 15 | 60 | 60 | 15 |
| | Butene content (wt. %) | - | 40 | 40 | - |
| | Content of component (C) (wt. %) | | | | |
| | GCH NAB-82 | 0.1 | 0.1 | 0.2 | - |
| | Millard3988, Milliken | - | - | - | - |
| Properties of the composition | Melt index (g/10 min) | 1.8 | 2.7 | 8.0 | 1.7 |
| | Solvent extract content (wt. %) | 40 | 43 | 38 | 40 |
| | Intrinsic viscosity of the solvent extract (dl/g) | 2.4 | 2.3 | 1.5 | 2.4 |
| | Thermal characteristics | | | | |
| | Melting temp. (Tm; °C) | 152 | 151 | 153 | 152 |
| | Glass transition temperature #1 (°C) | -29 | -32 | -28 | -29 |
| | Glass transition temperature #2 (°C) | -44 | -50 | -53 | -44 |
| Physical properties of the molded article | Flexural modulus (MPa) | 290 | 340 | 380 | 410 |
| | Heat deformation | 24 | 22 | 18 | 23 |
| | Izod impact resistance (kgf cm/cm; - 40°C) | 3.5 | 4.3 | 4.2 | 2.1 |
| | Elongation at break (%) | 520 | 520 | 510 | 460 |
| | Residual elongation (%) | 92 | 91 | 80 | 88 |
| | Volume resistivity (Ωcm) | 6×10¹⁶ | 4×10¹⁶ | 2×10¹⁶ | 3×10¹⁵ |
| | Volume resistivity upon aging (Qcm) | 2×10¹⁷ | 1×10¹⁶ | 7×10¹⁶ | 6×10¹⁶ |
| | DC breakdown voltage (kV/mm) | 450 | 447 | 423 | 351 |
| | Breakdown voltage upon aging (kV/mm) | 420 | 401 | 398 | 323 |

**[Table 2]**

| | | Comparative Example | | | |
|---|---|---|---|---|---|
| | | 2 | 3 | 4 | 5 |
| Components of the composition | Content of component (A) (wt. %) | 85 | 50 | 100 | 85 |
| | Propylene content (wt. %) | 85 | 96 | 68 | 85 |
| | Ethylene content (wt. %) | 15 | 4 | 32 | 15 |
| | Solvent extract content (wt. %) | 30 | 7 | 70 | 30 |
| | Intrinsic viscosity of the solvent extract (dl/g) | 2.2 | 1.0 | 4.2 | 2.4 |
| | Melt index (g/10 min) | 1.7 | 1.6 | 1.1 | 1.7 |
| | Melting temp. (Tm; °C) | 151 | 144 | 161 | 152 |
| | Glass transition temperature (°C) | -43 | 0 | -53/-32 | -43 |
| | Content of component (B) (wt. %) | 15 | 50 | - | 15 |
| | Propylene content (wt. %) | 85 | 85 | - | 85 |
| | Ethylene content (wt. %) | 15 | 15 | - | 15 |
| | Butene content (wt. %) | - | - | - | - |
| | Content of component (C) (wt. %) | | | | |
| | GCH NAB-82 | - | 0.15 | 0.15 | 10 |
| | Millard3988, Milliken | 0.2 | - | - | - |
| Properties of the composition | Melt index (g/10 min) | 1.9 | 2.0 | 1.2 | 1.7 |
| | Solvent extract content (wt. %) | 40 | 52 | 70 | **41** |
| | Intrinsic viscosity of the solvent extract (dl/g) | 2.4 | 2.3 | 3.8 | 2.3 |
| | Thermal characteristics | | | | |
| | Melting temp. (Tm; °C) | 154 | 142 | 163 | 152 |
| | Glass transition temperature #1 (°C) | -27 | -25 | -32 | -30 |
| | Glass transition temperature #2 (°C) | -43 | - | -53 | -43 |
| Physical properties of the molded article | Flexural modulus (MPa) | 520 | 380 | 200 | 320 |
| | Heat deformation | 17 | 73 | 95 | 19 |
| | Izod impact resistance (kgf cm/cm; - 40°C) | 2.0 | 1.8 | 8 | 2.7 |
| | Elongation at break (%) | 460 | 380 | 510 | 380 |
| | Residual elongation (%) | 90 | 71 | 32 | 84 |
| | Volume resistivity (Qcm) | 7×10¹⁵ | 8×10¹⁵ | 3×10¹⁵ | 3×10¹⁶ |
| | Volume resistivity upon aging (Qcm) | 2×10¹⁷ | NM | NM | 6×10¹⁶ |
| | DC breakdown voltage (kV/mm) | 371 | 292 | 283 | 321 |
| | Breakdown voltage upon aging (kV/mm) | 364 | 245 | 92 | 299 |

| | | | | | |
|---|---|---|---|---|---|
| *NM: not measurable | | | | | |

As can be seen from Tables 1 and 2 above, the articles molded from the resin compositions of the Examples falling within the scope of the present invention had low flexural modulus and excellent softness. The impact resistance was excellent by virtue of the low glass transition temperature of the ethylene-α-olefin rubber polymer.

The resin compositions of Comparative Examples 1 and 2 did not contain a beta nucleating agent, so that the softness of the molded articles was not sufficient. The compositions of Comparative Examples 3 and 4 had a high content of a solvent extract, so that the thermal resistance and electrical properties of the molded articles were not good. The composition of Comparative Example 5 had a too high content of the beta nucleating agent, and the effect of improving the physical properties of the molded article was rather deteriorated.

The polyolefin resin composition according to an embodiment of the present invention is excellent in insulation characteristics, as well as excellent in thermal resistance, breakdown voltage characteristics, capability for controlling space charges, and mechanical properties. Accordingly, the polyolefin resin article prepared therefrom can be advantageously used as an insulation layer of a high-voltage and ultra-high-voltage power cable.

## Claims

1. A polyolefin resin composition, which comprises (A) 60 to 100% by weight of an ethylene-propylene block copolymer obtained by polymerization of a propylene homopolymer or an ethylene-propylene random copolymer with an ethylene-propylene rubber copolymer in stages in reactors; and (B) 0 to 40% by weight of an ethylene-α-olefin rubber copolymer, based on the total weight of components (A) and (B), wherein the polyolefin resin composition further comprises (C) 0.02 to 0.5 part by weight of a beta nucleating agent for forming beta crystals relative to 100 parts by weight of component (A) and component (B), and wherein when the polyolefin resin composition is extracted at room temperature with a xylene solvent according to the method outlined in the description, the content of the rubber component (or solvent extract) thus extracted is 25 to 45% by weight.

2. The polyolefin resin composition of claim 1, wherein when the ethylene-propylene block copolymer (A) is extracted at room temperature with a xylene solvent according to the method outlined in the description, the content of the rubber component (or solvent extract) extracted is 1 to 45% by weight, and the solvent extract has an intrinsic viscosity of 1.0 to 3.0 dl/g when measured in a decalin solvent at 135°C using a viscometer.

3. The polyolefin resin composition of claim 1or 2, wherein the ethylene-propylene block copolymer (A) has a melting temperature (Tm) of 150 to 165°C according to the method outlined in the description, and a melt index of 0.5 to 20.0 g/10 minutes when measured at 230°C under a load of 2.16 kg according to the ASTM D 1238 method.

4. The polyolefin resin composition of any one of claims 1 to 3, wherein the content of ethylene in the ethylene-α-olefin rubber copolymer (B) is 5 to 90% by weight.

5. The polyolefin resin composition of any one of claims 1 to 4, wherein the ethylene-α-olefin rubber copolymer (B) comprises at least one selected from the group consisting of an ethylene-propylene rubber, an ethylene-1-butene rubber, an ethylene-butylene rubber, an ethylene-1-pentene rubber, an ethylene-1-hexene rubber, ethylene-1-heptene rubber, ethylene-1-octene rubber, and an ethylene-4-methyl-1-pentene rubber.

6. The polyolefin resin composition of any one of claims 1 to 5, wherein the beta nucleating agent (C) comprises at least one selected from the group consisting of gamma-quinacridone, delta-quinacridone, quinacridonequinone, indigosol, and civatine organic pigments, calcium carbonate modified with dimer aluminate, a mixture of calcium stearate and pimelic acid, diacidic calcium and zinc salts, diamines of adipic acid or suberic acid, N,N-dicyclohexyl-terephthalamide, and N',N'-dicyclohexyl-2,6-naphthalene-dicarboxy-amide.

7. The polyolefin resin composition of any one of claims 1 to 6, which further comprises at least one additive selected from the group consisting of an antioxidant, a neutralizer, a UV stabilizer, a long-term thermal stabilizer, a slip agent, an anti-blocking agent, a reinforcing agent, a filler, a weathering stabilizer, an antistatic agent, a lubricant, a nucleating agent, a flame retardant, a pigment, and a dye.

8. The polyolefin resin composition of any one of claims 1 to 7, wherein when the polyolefin resin composition is extracted at room temperature with a xylene solvent according to the method outlined in the description, the solvent extract has an intrinsic viscosity of 1.0 to 3.0 dl/g when measured in a decalin solvent at 135°C using a viscometer.

9. The polyolefin resin composition of any one of claims 1 to 8, which has a melting temperature (Tm) of 150 to 165°C according to the method outlined in the description and a melt index of 0.5 to 20.0 g/10 minutes when measured at 230°C under a load of 2.16 kg according to the ASTM D 1238 method.

10. The polyolefin resin composition of any one of claims 1 to 9, wherein the glass transition temperature of the rubber component in the polyolefin resin composition appears at -60 to -40°C and -40 to -20°C, respectively, when measured by a dynamic mechanical analyzer according to the method outlined in the description.

11. A polyolefin resin article molded from the polyolefin resin composition according to any one of claims 1 to 10, which is an insulation layer of a high-voltage or ultra-high-voltage power cable.

12. The polyolefin resin article of claim 11, wherein the polyolefin resin article has a flexural modulus of less than 400 MPa when measured in accordance with the ASTM D 790 method using an injection-molded specimen of 100 mm x 10 mm x 3 mm in size, and the polyolefin resin article having a length of 30 mm, a width of 15 mm, and a thickness of 2 mm has a deformation rate of less than 50% after a load of 1.6 kg is imposed thereon at 130°C for 6 hours according to the method outlined in the description.

13. The polyolefin resin article of claim 11 or 12, wherein the polyolefin resin article has a volume resistivity of 10¹⁶ Ωcm or more when measured at room temperature according to the method outlined in the description, and the volume resistivity when measured after the same specimen is heated (or aged) at 140°C in a convection oven for 30 days is 10¹⁶ Ωcm or more.

14. The polyolefin resin article of any one of claims 11 to 13, wherein the polyolefin resin article has an elongation of 400% or more when measured at 25 mm/min in accordance with the IEC 60811-501 method, and the elongation when measured after the same specimen is heated (or aged) at 140°C in a convection oven for 30 days is 75% or more relative to the initial (before heating) elongation.

15. The polyolefin resin article of any one of claim 11 to 14, wherein the polyolefin resin article in the form of a film having a thickness of 80 µm has a DC dielectric breakdown strength of 300 kV/mm or more according the method outlined in the description, and the DC dielectric breakdown strength when measured after the same specimen is heated (or aged) at 140°C in a convection oven for 30 days is 300 kV/mm or more.

## Patentansprüche

1. Polyolefinharzzusammensetzung, umfassend (A) 60 bis 100 Gew.-% eines Ethylen-Propylen-Blockcopolymers, das durch Polymerisation eines Propylenhomopolymers oder eines Ethylen-Propylen-Random-Copolymers mit einem Ethylen-Propylen-Kautschuk-Copolymer in Stufen in Reaktoren erhalten wird; und (B) 0 bis 40 Gew.-% eines Ethylen-α-Olefin-Kautschuk-Copolymers, basierend auf dem Gesamtgewicht der Komponenten (A) und (B), wobei die Polyolefinharzzusammensetzung ferner (C) 0,02 bis 0,5 Gewichtsteile eines Beta-Nukleierungsmittels zur Bildung von Beta-Kristallen bezogen auf 100 Gewichtsteile der Komponente (A) und der Komponente (B) umfasst und wobei, wenn die Polyolefinharzzusammensetzung bei Raumtemperatur mit einem Xylollösungsmittel gemäß dem in der Beschreibung beschriebenen Verfahren extrahiert wird, der Gehalt der Kautschukkomponente (oder des Lösungsmittelextrakts), die/der somit extrahiert wurde, 25 bis 45 Gew.-% beträgt.

2. Polyolefinharzzusammensetzung nach Anspruch 1, wobei, wenn das Ethylen-Propylen-Blockcopolymer (A) bei Raumtemperatur mit einem Xylol-Lösungsmittel gemäß dem in der Beschreibung beschriebenen Verfahren extrahiert wird, der Gehalt der Kautschukkomponente (oder des Lösungsmittelextrakts), die/der extrahiert wurde, 1 bis 45 Gew.-% beträgt und der Lösungsmittelextrakt eine Grenzviskosität von 1,0 bis 3,0 dl/g, bei Messung in einem Dekalin-Lösungsmittel bei 135 °C unter Verwendung eines Viskosimeters, aufweist.

3. Polyolefinharzzusammensetzung nach Anspruch 1 oder 2, wobei das Ethylen-Propylen-Blockcopolymer (A) eine Schmelztemperatur (Tm) von 150 bis 165 °C gemäß dem in der Beschreibung beschriebenen Verfahren und einen Schmelzindex von 0,5 bis 20,0 g/10 Minuten, bei Messung bei 230 °C unter einer Last von 2,16 kg gemäß dem ASTM D 1238-Verfahren, aufweist.

4. Polyolefinharzzusammensetzung nach einem der Ansprüche 1 bis 3, wobei der Gehalt an Ethylen in dem Ethylen-α-Olefin-Kautschuk-Copolymer (B) 5 bis 90 Gew.-% beträgt.

5. Polyolefinharzzusammensetzung nach einem der Ansprüche 1 bis 4, wobei das Ethylen-α-Olefin-Kautschuk-Copolymer (B) mindestens eines umfasst, das ausgewählt ist aus der Gruppe bestehend aus einem Ethylen-Propylen-Kautschuk, einem Ethylen-1-Buten-Kautschuk, einem Ethylen-Butylen-Kautschuk, einem Ethylen-1-Penten-Kautschuk, einem Ethylen-1-Hexen-Kautschuk, Ethylen-1-Hepten-Kautschuk, Ethylen-1-Octen-Kautschuk und einem Ethylen-4-Methyl-1-Penten-Kautschuk.

6. Polyolefinharzzusammensetzung nach einem der Ansprüche 1 bis 5, wobei das Beta-Nukleierungsmittel (C) mindestens eines umfasst, das ausgewählt ist aus der Gruppe bestehend aus organischen Gamma-Chinacridon-, Delta-Chinacridon-, Chinacridonchinon-, Indigosol- und Civatin-Pigmenten, mit Dimeraluminat modifiziertem Calciumcarbonat, einem Gemisch aus Calciumstearat und Pimelinsäure, disauren Calcium- und Zinksalzen, Diaminen von Adipinsäure oder Suberinsäure, N,N-Dicyclohexylterephthalamid und N',N'-Dicyclohexyl-2,6-naphthalindicarboxyamid.

7. Polyolefinharzzusammensetzung nach einem der Ansprüche 1 bis 6, die ferner mindestens ein Additiv umfasst, das ausgewählt ist aus der Gruppe bestehend aus einem Antioxidans, einem Neutralisator, einem UV-Stabilisator, einem thermischen Langzeitstabilisator, einem Gleitmittel, einem Antiblockiermittel, einem Verstärkungsmittel, einem Füllmittel, einem Witterungsstabilisator, einem Antistatikmittel, einem Schmiermittel, einem Nukleierungsmittel, einem Flammhemmungsmittel, einem Pigment und einem Farbstoff.

8. Polyolefinharzzusammensetzung nach einem der Ansprüche 1 bis 7, wobei, wenn die Polyolefinharzzusammensetzung bei Raumtemperatur mit einem Xylol-Lösungsmittel gemäß dem in der Beschreibung beschriebenen Verfahren extrahiert wird, der Lösungsmittelextrakt eine Grenzviskosität von 1,0 bis 3,0 dl/g, bei Messung in einem Dekalin-Lösungsmittel bei 135 °C unter Verwendung eines Viskosimeters, aufweist.

9. Polyolefinharzzusammensetzung nach einem der Ansprüche 1 bis 8, die eine Schmelztemperatur (Tm) von 150 bis 165 °C gemäß dem in der Beschreibung beschriebenen Verfahren und einen Schmelzindex von 0,5 bis 20,0 g/10 Minuten, bei Messung bei 230 °C unter einer Last von 2,16 kg gemäß dem ASTM D 1238-Verfahren, aufweist.

10. Polyolefinharzzusammensetzung nach einem der Ansprüche 1 bis 9, wobei die Glasübergangstemperatur der Kautschukkomponente in der Polyolefinharzzusammensetzung bei -60 bis -40 °C bzw. -40 bis -20 °C, bei Messung durch einen dynamisch-mechanischen Analysator gemäß dem in der Beschreibung beschriebenen Verfahren, erscheint.

11. Polyolefinharz-Artikel, geformt aus der Polyolefinharzzusammensetzung nach einem der Ansprüche 1 bis 10, der eine Isolationsschicht eines Hochspannungs- oder Ultrahochspannungsstromkabels ist.

12. Polyolefinharz-Artikel nach Anspruch 11, wobei der Polyolefinharz-Artikel einen Biegemodul von weniger als 400 MPa, bei Messung gemäß dem ASTM D 790-Verfahren unter Verwendung einer spritzgegossenen Probe von 100 mm x 10 mm x 3 mm Größe, aufweist und der Polyolefinharz-Artikel, der eine Länge von 30 mm, eine Breite von 15 mm und eine Dicke von 2 mm aufweist, eine Verformungsrate von weniger als 50 % aufweist, nachdem eine Last von 1,6 kg darauf bei 130 °C für 6 Stunden gemäß dem in der Beschreibung beschriebenen Verfahren aufgebracht wurde.

13. Polyolefinharz-Artikel nach Anspruch 11 oder 12, wobei der Polyolefinharz-Artikel einen spezifischen Volumenwiderstand von 10¹⁶ Ωcm oder mehr, bei Messung bei Raumtemperatur gemäß dem in der Beschreibung beschriebenen Verfahren, aufweist und der spezifische Volumenwiderstand bei Messung, nachdem dieselbe Probe für 30 Tage bei 140 °C in einem Konvektionsofen erwärmt (oder gealtert) wurde, 10¹⁶ Ωcm oder mehr beträgt.

14. Polyolefinharz-Artikel nach einem der Ansprüche 11 bis 13, wobei der Polyolefinharz-Artikel eine Dehnung von 400 % oder mehr, bei Messung bei 25 mm/min gemäß dem IEC 60811-501-Verfahren, aufweist und die Dehnung bei Messung, nachdem dieselbe Probe für 30 Tage bei 140 °C in einem Konvektionsofen erwärmt (oder gealtert) wurde, 75 % oder mehr bezogen auf die anfängliche (dem Erwärmen vorausgehende) Dehnung beträgt.

15. Polyolefinharz-Artikel nach einem der Ansprüche 11 bis 14, wobei der Polyolefinharz-Artikel in Form eines Films mit einer Dicke von 80 µm eine dielektrische DC-Durchschlagsfestigkeit von 300 kV/mm oder mehr gemäß dem in der Beschreibung beschriebenen Verfahren aufweist und die dielektrische DC-Durchschlagsfestigkeit bei Messung, nachdem dieselbe Probe für 30 Tage bei 140 °C in einem Konvektionsofen erwärmt (oder gealtert) wurde, 300 kV/mm oder mehr beträgt.

## Revendications

1. Composition de résine de polyoléfine, qui comprend (A) 60 à 100 % en poids d'un copolymère séquencé d'éthylène-propylène obtenu par polymérisation d'un homopolymère de propylène ou d'un copolymère aléatoire d'éthylène-propylène avec un copolymère de caoutchouc d'éthylène-propylène par étapes dans des réacteurs ; et (B) 0 à 40 % en poids d'un copolymère de caoutchouc d'éthylène-α-oléfine, par rapport au poids total des composants (A) et (B), ladite composition de résine de polyoléfine comprenant en outre (C) 0,02 à 0,5 partie en poids d'un agent de nucléation bêta pour former des cristaux bêta par rapport à 100 parties en poids de composant (A) et de composant (B), et lorsque ladite composition de résine de polyoléfine est extraite à température ambiante avec un solvant de xylène selon le procédé décrit dans la description, ladite teneur en composant de caoutchouc (ou d'extrait de solvant) ainsi extraite est de 25 à 45 % en poids.

2. Composition de résine de polyoléfine selon la revendication 1, lorsque ledit copolymère séquencé d'éthylène-propylène (A) est extrait à température ambiante avec un solvant de xylène selon le procédé décrit dans la description, ladite teneur en composant de caoutchouc (ou d'extrait de solvant) extrait est de 1 à 45 % en poids, et ledit extrait de solvant présentant une viscosité intrinsèque de 1,0 à 3,0 dl/g lorsqu'elle est mesurée dans un solvant de décaline à 135°C à l'aide d'un viscosimètre.

3. Composition de résine de polyoléfine selon la revendication 1 ou 2, ledit copolymère séquencé d'éthylène-propylène (A) présentant une température de fusion (Tm) de 150 à 165°C selon la méthode décrite dans la description, et un indice de fusion de 0,5 à 20,0 g/10 minutes lorsqu'il est mesuré à 230°C sous une charge de 2,16 kg selon la méthode ASTM D 1238.

4. Composition de résine de polyoléfine selon l'une quelconque des revendications 1 à 3, ladite teneur en éthylène dans le copolymère de caoutchouc d'éthylène-α-oléfine (B) étant de 5 à 90 % en poids.

5. Composition de résine de polyoléfine selon l'une quelconque des revendications 1 à 4, ledit copolymère de caoutchouc d'éthylène-α-oléfine (B) comprenant au moins un caoutchouc choisi dans le groupe constitué par un caoutchouc d'éthylène-propylène, un caoutchouc d'éthylène-1-butène, un caoutchouc d'éthylène-butylène, un caoutchouc d'éthylène-1-pentène, un caoutchouc d'éthylène-1-hexène, un caoutchouc d'éthylène-1-heptène, un caoutchouc d'éthylène-1-octène et un caoutchouc d'éthylène-4-méthyl-1-pentène.

6. Composition de résine de polyoléfine selon l'une quelconque des revendications 1 à 5, ledit agent de nucléation bêta (C) comprenant au moins un pigment choisi dans le groupe constitué par les pigments organiques gamma-quinacridone, delta-quinacridone, quinacridonequinone, indigosol et civatine, le carbonate de calcium modifié par l'aluminate dimère, un mélange de stéarate de calcium et d'acide pimélique, les sels de calcium et de zinc diacides, les diamines de l'acide adipique ou de l'acide subérique, le N,N-dicyclohexyl-téréphtalamide et le N',N'-dicyclohexyl-2,6-naphtalène-dicarboxy-amide.

7. Composition de résine de polyoléfine selon l'une quelconque des revendications 1 à 6, qui comprend en outre au moins un additif choisi dans le groupe constitué par un antioxydant, un neutralisant, un stabilisant UV, un stabilisant thermique à long terme, un agent glissant, un agent anti-bloquant, un agent de renforcement, une charge, un stabilisant contre les intempéries, un agent antistatique, un lubrifiant, un agent de nucléation, un ignifugeant, un pigment et un colorant.

8. Composition de résine de polyoléfine selon l'une quelconque des revendications 1 à 7, lorsque ladite composition de résine de polyoléfine est extraite à température ambiante avec un solvant de xylène selon le procédé décrit dans la description, ledit extrait de solvant présentant une viscosité intrinsèque de 1,0 à 3,0 dl/g lorsqu'elle est mesurée dans un solvant de décaline à 135°C à l'aide d'un viscosimètre.

9. Composition de résine de polyoléfine selon l'une quelconque des revendications 1 à 8, qui présente une température de fusion (Tm) de 150 à 165°C selon la méthode décrite dans la description et un indice de fusion de 0,5 à 20,0 g/10 minutes lorsqu'il est mesuré à 230°C sous une charge de 2,16 kg selon la méthode ASTM D 1238.

10. Composition de résine de polyoléfine selon l'une quelconque des revendications 1 à 9, ladite température de transition vitreuse du composant de caoutchouc dans la composition de résine de polyoléfine apparaissant à -60 à -40°C et -40 à -20°C, respectivement, lorsqu'elle est mesurée par un analyseur mécanique dynamique selon la méthode décrite dans la description.

11. Article en résine de polyoléfine moulé à partir de la composition de résine de polyoléfine selon l'une quelconque des revendications 1 à 10, qui est une couche isolante d'un câble d'alimentation haute tension ou ultra haute tension.

12. Article en résine de polyoléfine selon la revendication 11, ledit article en résine de polyoléfine présentant un module de flexion inférieur à 400 MPa lorsqu'il est mesuré selon la méthode ASTM D 790 à l'aide d'une éprouvette moulée par injection d'une taille de 100 mm x 10 mm x 3 mm, et ledit article en résine de polyoléfine présentant une longueur de 30 mm, une largeur de 15 mm et une épaisseur de 2 mm présentant un taux de déformation inférieur à 50 % après qu'une charge de 1,6 kg lui ait été imposée à 130°C pendant 6 heures selon la méthode décrite dans la description.

13. Article en résine de polyoléfine selon la revendication 11 ou 12, ledit article en résine de polyoléfine présentant une résistivité volumique de 10¹⁶ Ωcm ou plus lorsqu'elle est mesurée à température ambiante selon la méthode décrite dans la description, et ladite résistivité volumique lorsqu'elle est mesurée après que la même éprouvette ait été chauffée (ou vieillie) à 140°C dans un four à convection pendant 30 jours étant supérieure ou égale à 10¹⁶ Ωcm.

14. Article en résine de polyoléfine selon l'une quelconque des revendications 11 à 13, ledit article en résine de polyoléfine présentant un allongement supérieur ou égal à 400 % lorsqu'il est mesuré à 25 mm/min selon la méthode CEI 60811-501, et ledit allongement lorsqu'il est mesuré après que la même éprouvette ait été chauffée (ou vieillie) à 140°C dans un four à convection pendant 30 jours étant supérieur ou égal à 75 % par rapport à l'allongement initial (avant chauffage).

15. Article en résine de polyoléfine selon l'une quelconque des revendications 11 à 14, ledit article en résine de polyoléfine sous la forme d'un film présentant une épaisseur de 80 µm présentant une résistance à la rupture diélectrique CC supérieure ou égale à 300 kV/mm selon la méthode décrite dans la description, et ladite résistance à la rupture diélectrique CC lorsqu'elle est mesurée après que la même éprouvette ait été chauffée (ou vieillie) à 140°C dans un four à convection pendant 30 jours étant supérieure ou égale à 300 kV/mm.
